# EUROPÄISCHE PATENTANMELDUNG

(11) **EP 2 399 718 A1**
(43) Veröffentlichungstag der Anmeldung: **28.12.2011**
(21) Anmeldenummer: 10006689.3
(22) Anmeldetag: 28.06.2010
(51) Int. Cl.: B29B 13/06, F26B 17/12, F26B 21/08

(54) **Vorrichtung und Verfahren zum Trocknen von Kunststoffgranulat**

(71) Anmelder: Wenz Kunststoff GmbH & Co. KG, 58511 Lüdenscheid (DE)
(72) Erfinder: Weller, Karsten, 58509 Lüdenscheid (DE)
(74) Vertreter: Kötter, Ulrich

(57) **Zusammenfassung**

Die Erfindung betrifft eine Vorrichtung zum Trocknen von Kunststoffgranulaten, umfassend einen Behälter (1), durch welchen das Granulat hindurchführbar ist, und eine Druckluftzufuhr mit nachfolgendem Ventil (3) zur Entspannung der Druckluft und nachgeschalteter Heizung (9). Es ist ein Gebläse (5) zur geregelten Beimengung von Umgebungsluft angeordnet.

Die Erfindung betrifft weiterhin ein Verfahren zum Trocknen von Kunststoffgranulaten, wobei durch einen Behälter (1) ein Granulatstrom geführt wird und der Behälter (1) mit getrockneter Luft beaufschlagt wird, wobei die Trocknungsluft durch Entspannung und nachfolgende Erwärmung von Druckluft erzeugt wird. Der entspannten Luft wird in Abhängigkeit von deren Taupunkt Umgebungsluft beigemengt.

## Beschreibung

Die Erfindung betrifft eine Vorrichtung zum Trocknen von Kunststoffgranulaten nach dem Oberbegriff des Patentanspruchs 1. Die Erfindung betrifft weiterhin ein Verfahren zum Trocknen von Kunststoffgranulaten nach dem Patentanspruch 5.

Vor der Verarbeitung von Kunststoffgranulat ist es zwingend erforderlich, dieses zu trocknen. Dieses betrifft insbesondere hygroskopische Kunststoffe, wie beispielsweise PA oder PBT, welche Wassermoleküle vergleichbar einem Schwamm speichern (Wasserstoffbrückenbildung). Durch Feuchtigkeit des eingesetzten Kunststoffgranulates werden minderwertige Formteile verursacht, welche den gestellten Anforderungen nicht entsprechen. Typische Fehlerbilder reichen von den sogenannten Feuchtigkeitsschlieren bis hin zu einem Molekularkettenabbau mit entsprechendem Festigkeitsverlust.

Zum Trocknen von Kunststoffgranulaten kommen unterschiedliche Trocknungsverfahren zum Einsatz. Bei Trockenlufttrocknern erfolgt die Trockenlufterzeugung in einer Luft-Trockenpatrone im Trockner. Die zu entfeuchtende Luft wird in der Trockenpatrone an einem sogenannten Molekularsieb vorbeigeströmt, welches das in der Luft enthaltene Wasser aufnimmt. Das Molekularsieb besteht aus einem porösen Granulat, welches eines hohe Aufnahmefähigkeit für Wasser besitzt.

Aufgrund des einfachen Aufbaus werden zur Trocknung von Kunststoffgranulat bevorzugt Drucklufttrockner eingesetzt. Dabei wird an einen regelmäßig vorhandenen Druckluftanschluss ein Ventil zur Druck- und Durchflussmengenreduzierung angeschlossen, an das sich eine Prozessheizung anschließt, welche die Luft auf Trocknungstemperatur erwärmt, bevor sie den Materialbehälter durchströmt. Dabei macht man sich folgenden Effekt zu Nutze: mit steigendem Druck nimmt die Aufnahmefähigkeit der Luft für Wasser ab. Bei der Verdichtung von Luft wird bereits ein Großteil des Wassers abgeschieden. Wird diese verdichtete Luft auf den Umgebungsdruck entspannt, hat die entspannte Luft einen Taupunkt von ca. - 25° Celsius. Dabei ist der Taupunkt die Temperatur, bei der die in der Luft gebundene Feuchtigkeit an einem Objekt kondensiert.

Der Einsatz derartiger Drucklufttrockner hat sich bewährt. Nachteilig erweist sich jedoch, dass die Erzeugung der erforderlichen Druckluft sehr aufwendig und kostenintensiv ist, wobei große Mengen Druckluft für die Trocknung des Kunststoffgranulats erforderlich sind.

Hier will die Erfindung Abhilfe schaffen. Der Erfindung liegt die Aufgabe zugrunde, eine Vorrichtung zum Trocknen von Kunststoffgranulaten auf Grundlage des Prinzips eines Drucklufttrockners zu schaffen, die einen kostengünstigeren Trocknungsprozess ermöglicht. Gemäß der Erfindung wird diese Aufgabe durch die Merkmale des kennzeichnenden Teils des Patentanspruchs 1 gelöst.

Mit der Erfindung ist eine Vorrichtung zum Trocknen von Kunststoffgranulaten geschaffen, welche einen kostengünstigeren Trocknungsprozess ermöglicht. Der Erfindung liegt die Erkenntnis zugrunde, dass für die Trocknung von Kunststoffen in fast allen Anwendungsfällen ein Taupunkt von ca. - 10° Celsius ausreichend ist. Gleichzeitig unterliegt auch die Umgebungsluft sich ändernden Bedingungen hinsichtlich Luftdruck und Temperatur. So erhöht sich die Aufnahmefähigkeit bei steigender Temperatur im Sommer, wo die Luft sehr feucht sein kann und reduziert sich mit fallender Temperatur im Winter, wo die Luft sehr trocken ist. Vor diesem Hintergrund ist je nach Umgebungsluft eine Beimengung bestimmter Mengen an Umgebungsluft möglich, wobei ein Taupunkt der sich ergebenden Trocknungsluft von - 10° Celsius gewährleistet ist (der Taupunkt der Trockenluft ist entsprechend einstellbar). Hinzu kommt, dass die Umgebungsluft bei der Kunststoffverarbeitung naturgemäß sehr warm ist. Hierdurch sind erhebliche Einsparungen an - sehr aufwendig herzustellender - Druckluft ermöglicht. Es ist anzumerken, dass die üblicherweise in Betrieben vorgehaltene Druckluft im entspannten Zustand einen Taupunkt von -20° bis - 30° Celsius aufweisen kann.

In Weiterbildung der Erfindung ist zwischen Heizung und Gebläse ein Taupunktmesser angeordnet, der mit der Steuerung des Ventils und/oder des Gebläses verbunden ist. Hierdurch ist eine kontinuierliche Ermittlung und Zuführung der maximalen Menge an Umgebungsluft ohne Unterschreitung des geforderten Taupunkts ermöglicht.

Vorteilhaft ist das Gebläse mit einem Zuluftfilter gekoppelt. Hierdurch ist ein Eintrag von Schmutzpartikeln in den beigemengten Luftstrom vermieden, wodurch einer Kontamination des zu trocknenden Kunststoffgranulats entgegengewirkt ist.

In weiterer Ausgestaltung der Erfindung sind hinter der Heizung ein erster Temperaturmesser zur Messung der Zulufttemperatur und innerhalb des Behälters ein zweiter Temperaturmesser zur Messung der Ablufttemperatur angeordnet, welche mit der Steuerung verbunden sind. Hierdurch ist eine optimale Steuerung der Heizung sowie der gesamten Trockenluftzufuhr ermöglicht. Ist die Temperatur der eingebrachten Trockenluft gleich der Temperatur der aus dem Behälter austretenden Luft, so ist dies ein Kennzeichen für ein energetisch gesättigtes System, sodass die Trockenluftmenge sowie die Heizleistung der Heizung reduziert werden kann.

Die Erfindung liegt weiterhin die Aufgabe zugrunde, ein Verfahren zum Trocknen von Kunststoffgranulaten bereitzustellen, welches ein aufwandminimiertes Trocknen auf Basis des Prinzips der Drucklufttrocknung ermöglicht. Gemäß der Erfindung wird diese Aufgabe durch die Merkmale des kennzeichnenden Teils des Patentanspruchs 7 gelöst. Durch die Bemengung von Umgebungsluft in Abhängigkeit von dem tatsächlich vorhandenen Taupunkt der entspannten Luft wird das erforderliche Volumen - aufwendig herzustellender - Druckluft minimiert.

Bevorzugt erfolgt die Messung des Taupunktes der entspannten Luft im Anschluss an die Beimengung von Umgebungsluft. Hierdurch ist die Installation eines Regelkreises ermöglicht, wodurch eine maximale Beimengung von Umgebungsluft ermöglicht ist. Vorteilhaft erfolgt die Beimengung von Umgebungsluft mittels eines Gebläses, welches über eine Steuerung gesteuert wird, die mit einem hinter dem Gebläse angeordneten Taupunktmesser verbunden ist. Alternativ kann die Taupunktregelung auch oder zusätzlich durch Steuerung des Ventils zur Steuerung der Druckluftzufuhr erfolgen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1: die schematische Darstellung einer Vorrichtung zum Trocknen von Kunststoffgranulaten und
- Figur 2: die schematische Darstellung einer Vorrichtung zum Trocknen von Kunststoffgranulaten in einer weiteren Ausführungsform.

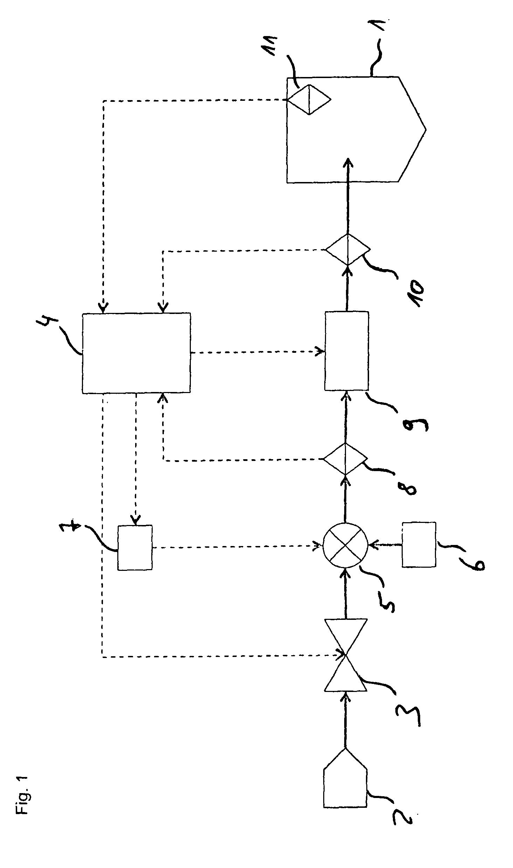

Die als Ausführungsbeispiel gemäß Figur 1 gewählte Vorrichtung besteht im Wesentlichen aus einer Druckluftquelle 2, die an ein Proportionalventil 3 angeschlossen ist, welches gesteuert über eine Steuerung 4 entspannte Druckluft durch eine Heizung 9 in den Behälter 1 abgibt. Durch den Behälter 1 wird kontinuierlich Kunststoffgranulat durchgeführt, welches über die eingebrachte Trocknungsluft getrocknet wird. Der durch die Vorrichtung geleitete Luftstrom ist in Figur 3 über durchgezogene Pfeile dargestellt, die Daten- und Steuerungsleitungen sind in Form von gestrichelten Pfeilen dargestellt. Die Steuerung des Proportionalventils 3 erfolgt über die Steuerung 4 anhand der Daten eines dem Gebläse 5 nachgeschalteten Taupunktmessers 8, der mit der Steuerung 4 verbunden ist.

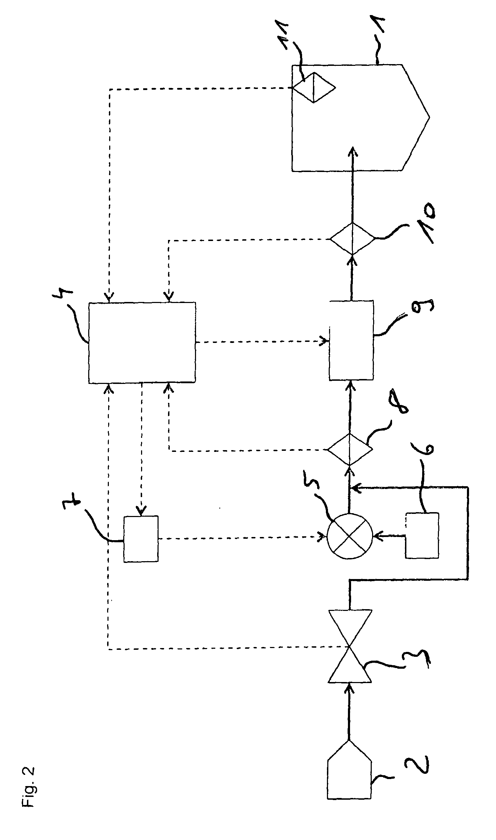

Zwischen dem Proportionalventil 3 und der Heizung 9 ist ein Gebläse 5 zur Beimengung von Umgebungsluft angeordnet. Das Gebläse 5 wird über die Steuerung 4 über einen Frequenzrichter 7 gesteuert. Dabei erfolgt die Steuerung des Gebläses 5 anhand der Daten eines vor dem Behälter 1 angeordneten Temperaturfühlers 10 zur Messung der Zulufttemperatur und eines am oberen Ende des Behälters 1 angeordneten Temperaturfühlers 11 zur Messung der Ablufttemperatur, welche mit der Steuerung 4 verbunden sind. Die von dem Gebläse 5 zugeführte Umgebungsluft wird über einen vorgeschalteten Zuluftfilter 6 von Verunreinigungen gereinigt. (Im Ausführungsbeispiel gemäß Figur 2 erfolgt die Einspeisung der Druckluft über das Proportionalventil 3 hinter dem Gebläse 5.)

Die Steuerung der Heizung 9 erfolgt ebenfalls über die Steuerung 4 anhand der Daten der Temperaturfühler 10, 11. Die Luftmenge des Gebläses 5 sowie die Intensität der Heizleistung der Heizung 9 richtet sich dabei nach der gemessenen Temperaturdifferenz zwischen den Temperaturfühlern 10, 11.

Zur Trocknung von durch den Behälter 1 kontinuierlich durchgeführten Kunststoffgranulats wird von der Druckluftquelle 2 Druckluft über das Proportionalventil 3 entspannt und der Taupunkt der entspannten Trockenluft durch den Taupunktmesser 8 ermittelt. Liegt der ermittelte Taupunkt niedriger als der erforderliche Taupunkt von regelmäßig - 10° Celsius, wird über die Steuerung 4 über den Frequenzrichter 7 das Gebläse 5 angesteuert, wodurch Umgebungsluft gefiltert durch den Zuluftfilter 6 dem Trockenluftstrom beigemengt wird. Gleichzeitig wird die zugeführte Druckluftmenge über Ansteuerung des Proportionalventils 3 reduziert. Der Trockenluftstrom wird über die Heizung 9 erwärmt und dem Behälter 1 zugeführt. Dabei wird die Temperatur des dem Behälter 1 zugeführten Zuluftstroms durch den Temperaturfühler 10 gemessen, dessen Messwerte an die Steuerung 4 weitergeleitet werden. Außerdem erfolgt eine Temperaturmessung des aus dem Behälter 1 herausströmenden Abluftstroms über den Temperaturfühler 11, dessen Messwerte ebenfalls an die Steuerung 4 gemeldet werden. Anhand der Differenz der von den Temperaturfühlern 10, 11 gemessenen Werte erfolgt eine Steuerung der Heizung 9 sowie des gesamten Trockenluftmengenstroms durch die Steuerung 4.

Mit Hilfe des Gegenstands der Erfindung ist also eine einfache und gleichsam effektive Taupunktregulierung unter minimalem Einsatz von Druckluft gegeben.

## Patentansprüche

1. Vorrichtung zum Trocknen von Kunststoffgranulaten, umfassend einen Behälter, durch welchen das Granulat hindurchführbar ist, und eine Druckluftzufuhr mit nachfolgendem Ventil zur Entspannung der Druckluft und nachgeschalteter Heizung sowie einer Einleitung in den Behälter, **dadurch gekennzeichnet, dass** ein Gebläse (5) zur geregelten Beimengung von Umgebungsluft angeordnet ist.

2. Vorrichtung nach Anspruch 1, **dadurch gekennzeichnet, dass** das Gebläse (5) zwischen Ventil (3) und Heizung (9) angeordnet ist.

3. Vorrichtung nach Anspruch 1, **dadurch gekennzeichnet, dass** das Gebläse (5) vor der Drucklufteinspeisung über das Ventil (3) angeordnet ist.

4. Vorrichtung nach einem der vorgenannten Ansprüche, **dadurch gekennzeichnet, dass** zwischen Heizung (9) und Gebläse (5) ein Taupunktmesser (8) angeordnet ist, der mit der Steuerung (4) des Gebläses (5) verbunden ist.

5. Vorrichtung nach einem der vorgenannten Ansprüche, **dadurch gekennzeichnet, dass** das Gebläse (5) mit einem Zuluftfilter (6) gekoppelt ist.

6. Vorrichtung nach einem der vorgenannten Ansprüche, **dadurch gekennzeichnet, dass** hinter der Heizung (9) ein erster Temperaturmesser (10) zur Messung der Zulufttemperatur und innerhalb des Behälters (1) ein zweiter Temperaturmesser (11) zur Messung der Ablufttemperatur angeordnet sind, welche mit der Steuerung (4) verbunden sind.

7. Verfahren zum Trocknen von Kunststoffgranulaten, wobei durch einen Behälter ein Granulatstrom geführt wird und der Behälter mit getrockneter Luft beaufschlagt wird, wobei die Trockungsluft durch Entspannung und nachfolgende Erwärmung von Druckluft erzeugt wird, **dadurch gekennzeichnet, dass** der entspannten Luft in Abhängigkeit von deren Taupunkt Umgebungsluft beigemengt wird.

8. Verfahren nach Anspruch 5, **dadurch gekennzeichnet, dass** die Messung des Taupunktes der entspannten Luft im Anschluss an die Beimengung von Umgebungsluft erfolgt.

9. Verfahren nach Anspruch 6, **dadurch gekennzeichnet, dass** die Beimengung von Umgebungsluft mittels eines Gebläses (5) erfolgt, welches über eine Steuerung (4) gesteuert wird, die mit einem hinter dem Gebläse (5) angeordneten Taupunktmesser (8) verbunden ist.
